# FASCICULE DE BREVET EUROPEEN

(11) **EP 2 772 868 B1**
(45) Date de publication et mention de la délivrance du brevet: **06.12.2017**
(21) Numéro de dépôt: 14154663.0
(22) Date de dépôt: 11.02.2014
(51) Int. Cl.: G06F 21/44, G06F 21/57

(54) **PROCEDE DE MISE A JOUR DU SYSTEME D EXPLOITATION D'UN MICROCIRCUIT SECURISE**
AKTUALISIERUNGSVERFAHREN EINES BETRIEBSSYSTEMS EINES GESICHERTEN MIKROSCHALTKREISES
METHOD OF UPDATING THE OPERATING SYSTEM OF A SECURE MICROCIRCUIT

(30) Priorité: 27.02.2013 FR 1351727
(43) Date de publication de la demande: 03.09.2014
(73) Titulaire: Inside Secure, 13590 Meyreuil (FR)
(72) Inventeur: Chew, Gary, 13090 AIX EN PROVENCE (FR)
(74) Mandataire: de Roquemaurel, Bruno

(56) Documents cités:
- JP-A- 2003 216 431
- US-A1- 2006 039 564
- US-A1- 2012 115 455

## Description

La présente invention concerne les microcircuits sécurisés tels que ceux qui sont intégrés dans des cartes à puce, et les objets portables tels que les téléphones mobiles et les tablettes numériques, intégrant de telles cartes à puce.

La présente invention s'applique notamment aux cartes à puces à contact ou à champ proche NFC (Near Field Communication), permettant de sécuriser des transactions sensibles telles que des transactions de paiement ou d'accès à un service,

Les microcircuits de carte à puce comprennent généralement un processeur, une mémoire volatile et une mémoire non volatile, réinscriptible, pour mémoriser notamment des programmes exécutés par le processeur et des données propres au système, et à l'utilisateur de la carte à puce, ainsi que d'autres données à conserver entre deux transactions. Les programmes exécutés par le processeur comprennent généralement un système ou programme d'exploitation (operating system) et des applications.

Pour des raisons de sécurité, le chargement du programme d'exploitation dans la mémoire non volatile du microcircuit est généralement effectué par le fabricant du microcircuit. L'ensemble du microcircuit et de son programme d'exploitation doit être certifié par une procédure de certification très contraignante, afin que le microcircuit puisse être autorisé par la suite à effectuer des transactions sensibles telles que des transactions de paiement. Traditionnellement, le cycle de vie d'un microcircuit sécurisé comprend des étapes de certification séparées du microcircuit sur le plan matériel et du programme d'exploitation prévu pour être installé dans le microcircuit. Une fois que le microcircuit est fabriqué, le fabricant du microcircuit introduit dans la mémoire non volatile du microcircuit un identifiant unique qui peut être un numéro de série, des clés spécifiques du microcircuit, une clé publique du distributeur du microcircuit, et le programme d'exploitation avec des données associées. Toutes ces données et le programme d'exploitation peuvent être stockés dans une mémoire réinscriptible ou non du microcircuit. Après avoir subi un certain nombre de tests, le microcircuit est remis par le fabricant au distributeur. Le fabricant et/ou le distributeur peuvent installer des applications dans le microcircuit en respectant une certaine procédure faisant intervenir une authentification de l'application et d'un serveur fournissant l'application au microcircuit, l'application ayant préalablement été certifiée par une entité de certification dédiée. Le distributeur contrôle ensuite la distribution du microcircuit aux utilisateurs et assure la gestion du cycle de vie du microcircuit.

Une fois qu'est certifié l'ensemble du microcircuit avec son programme d'exploitation installé, il n'est plus possible de modifier le programme d'exploitation, sans devoir faire subir à l'ensemble une nouvelle procédure de certification. Pourtant, il existe un besoin de modification du programme d'exploitation d'un microcircuit sécurisé, notamment pour que des microcircuits déjà en service puissent bénéficier de mises à jour du programme d'exploitation, ou puissent recevoir un nouveau programme d'exploitation, par exemple émis par une autre entité. La demande de brevet américaine US2012/0115455 divulgue un système d'approvisionnement de dispositif électronique en deux étapes. Le dispositif électronique comprend une table d'initialisation d'approvisionnement permettant de déterminer si un serveur est autorisé à effectuer un approvisionnement initial du dispositif. Cet approvisionnement initial est sécurisé par chiffrement sur la base d'un système de clé privée/publique et peut comprendre l'obtention de l'adresse d'un deuxième serveur permettant d'effectuer la suite de l'approvisionnement. L'approvisionnement initial permet aussi l'obtention de clés de chiffrement. L'invention concerne un procédé de chargement d'un programme d'exploitation dans un microcircuit sécurisé, comprenant des étapes consistant à : charger et installer dans le microcircuit un programme d'initialisation qui est lancé à l'activation du microcircuit, charger dans le microcircuit des données d'initialisation comprenant une première clé publique, exécuter une procédure d'authentification mutuelle entre le microcircuit et un premier serveur disposant d'une clé privée correspondant à la première clé publique, et si l'authentification mutuelle a réussi, charger à partir du premier serveur des données de profil de programme d'exploitation, contenant une seconde clé publique, exécuter une procédure d'authentification mutuelle entre le microcircuit et un second serveur disposant d'une clé privée correspondant à la seconde clé publique, et si l'authentification mutuelle a réussi, charger à partir du second serveur et installer un programme d'exploitation dans le microcircuit, et activer le programme d'exploitation lorsque celui-ci est présent dans le microcircuit.

Selon un mode de réalisation, le procédé comprend des étapes consistant à : exécuter une procédure d'authentification mutuelle entre le microcircuit et un troisième serveur disposant d'une clé privée correspondant à une troisième clé publique figurant dans les données de profil de programme d'exploitation, et si l'authentification mutuelle a réussi, charger à partir du troisième serveur et installer une application dans le microcircuit, et/ou charger dans le microcircuit des données d'utilisateur du microcircuit.

Selon un mode de réalisation, le procédé comprend des étapes consistant à : exécuter une procédure d'authentification mutuelle entre le microcircuit et un troisième serveur disposant d'une clé privée correspondant à une troisième clé publique figurant dans les données de profil de programme d'exploitation, et si l'authentification mutuelle a réussi, exécuter une commande d'effacement du programme d'exploitation et des données de profil de programme d'exploitation, dans le microcircuit, la commande d'effacement étant transmise au microcircuit à partir du troisième serveur, et placer le microcircuit dans un état où il est susceptible de recevoir de nouvelles données de profil de programme d'exploitation à partir du premier serveur.

Selon un mode de réalisation, les données de profil de programme d'exploitation et/ou le programme d'exploitation sont transmis sous une forme chiffrée en utilisant une clé secrète partagée entre le microcircuit et le premier et/ou second serveur durant la procédure d'authentification mutuelle.

Selon un mode de réalisation, le procédé comprend une étape de réception par le microcircuit d'un signal d'activation d'un mode de commande dans lequel le microcircuit peut recevoir des commandes d'un serveur, y compris une commande d'effacement du programme d'exploitation.

Selon un mode de réalisation, le signal d'activation du mode de commande comprend une séquence de plusieurs signaux de réinitialisation reçus pendant une certaine durée.

Selon un mode de réalisation, le procédé comprend une étape de contrôle d'intégrité du programme d'initialisation au démarrage du microcircuit.

Selon un mode de réalisation, l'installation du programme d'exploitation dans le microcircuit est suivie d'un contrôle d'intégrité du programme d'exploitation installé, le programme d'exploitation étant effacé du microcircuit si le contrôle d'intégrité a échoué. L'invention concerne également un microcircuit sécurisé configuré par un programme d'initialisation pour : charger dans le microcircuit des données d'initialisation comprenant une première clé publique, exécuter une procédure d'authentification mutuelle entre le microcircuit et un premier serveur disposant d'une clé privée correspondant à la première clé publique, et si l'authentification mutuelle a réussi, charger à partir du premier serveur des données de profil de programme d'exploitation, contenant une seconde clé publique, et exécuter une procédure d'authentification mutuelle entre le microcircuit et un second serveur disposant d'une clé privée correspondant à la seconde clé publique, et si l'authentification mutuelle a réussi, charger à partir du second serveur et installer un programme d'exploitation dans le microcircuit, et activer le programme d'exploitation lorsque celui est présent dans le microcircuit.

Selon un mode de réalisation, le microcircuit est configuré par le programme d'exploitation pour : exécuter une procédure d'authentification mutuelle entre le microcircuit et un troisième serveur disposant d'une clé privée correspondant à une troisième clé publique figurant dans les données de profil de programme d'exploitation, et si l'authentification mutuelle a réussi, recevoir du troisième serveur et installer une application dans le microcircuit, et/ou charger dans le microcircuit des données d'utilisateur du microcircuit.

Selon un mode de réalisation, le microcircuit est configuré par le programme d'initialisation pour : exécuter une procédure d'authentification mutuelle entre le microcircuit et un troisième serveur disposant d'une clé privée correspondant à une troisième clé publique figurant dans les données de profil de programme d'exploitation, et si l'authentification mutuelle a réussi, recevoir du troisième serveur et exécuter une commande d'effacement du programme d'exploitation et des données de profil de programme d'exploitation, dans le microcircuit, et placer le microcircuit dans un état où il est susceptible de recevoir de nouvelles données de profil de programme d'exploitation à partir du premier serveur.

Selon un mode de réalisation, le microcircuit est configuré par le programme d'initialisation pour recevoir un signal d'activation d'un mode de commande dans lequel le microcircuit peut recevoir des commandes d'un serveur, y compris une commande d'effacement du programme d'exploitation.

Selon un mode de réalisation, le signal d'activation du mode de commande comprend une séquence de plusieurs signaux de réinitialisation reçus pendant une certaine durée.

Selon un mode de réalisation, le microcircuit est configuré par le programme d'initialisation pour contrôler l'intégrité du programme d'initialisation au démarrage du microcircuit.

Selon un mode de réalisation, le microcircuit est configuré par le programme d'initialisation pour contrôler l'intégrité du programme d'exploitation une fois installé, et pour effacer le programme d'exploitation du microcircuit si le contrôle d'intégrité a échoué.

Des exemples de réalisation de l'invention seront décrits dans ce qui suit, à titre non limitatif en relation avec les figures jointes parmi lesquelles :
la figure 1 représente schématiquement un microcircuit sécurisé,
la figure 2 est un diagramme d'état du microcircuit de la figure 1, selon un mode de réalisation,
la figure 3 est une séquence d'étapes exécutée au démarrage du microcircuit de la figure 1, selon un mode de réalisation,
les figures 4A à 4E représentent schématiquement le contenu de mémoires non volatiles du microcircuit sécurisé, à différents états du microcircuit de la figure 1, selon un mode de réalisation,
la figure 5 représente des étapes d'authentification mutuelle d'un serveur et du microcircuit de la figure 1, selon un mode de réalisation,
la figure 6 représente des étapes exécutées par le microcircuit et différents serveurs susceptibles d'être authentifiés par le microcircuit.

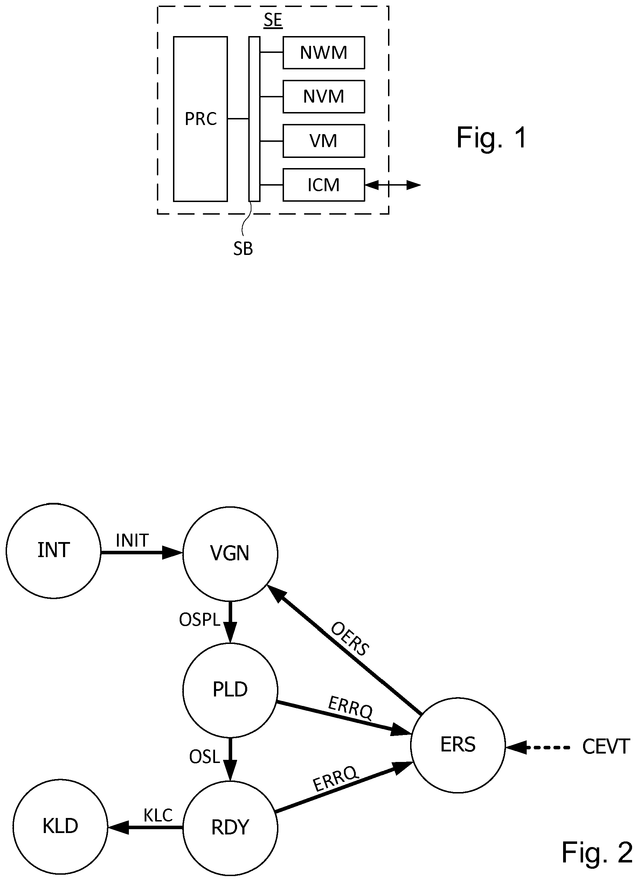

La figure 1 représente un microcircuit sécurisé SE. Le microcircuit SE comprend un processeur PRC, des mémoires NRM, VM, NVM, des circuits de communication ICM, et un bus SB reliant le processeur PRC aux mémoires NWM, NVM, VM et aux circuits ICM. Les mémoires comprennent une mémoire volatile VM (de type RAM - Random-Access Memory), et une ou plusieurs mémoires non volatiles NWM, NVM. Les mémoires non volatiles comprennent une mémoire réinscriptible NVM (de type Flash ou EEPROM - Electrically-Erasable Programmable Read-Only Memory) et éventuellement, une mémoire NWM inscriptible une seule fois (de type ROM - Read-Only Memory). Les circuits ICM peuvent comprendre des circuits de communication à contact et/ou sans contact.

La figure 2 représente un diagramme d'état d'un programme SBL d'initialisation et de chargement sécurisé d'un système ou programme d'exploitation. Le programme SBL est installé dans la mémoire NVM ou NWM du microcircuit lors de la fabrication de ce dernier. Le programme SBL comprend notamment des fonctions de cryptographie prévues pour sécuriser le chargement d'un tel programme d'exploitation et de données associées, et authentifier une entité émettrice du programme d'exploitation, et des fonctions de communication exploitant les circuits ICM, prévues pour communiquer avec une entité susceptible de fournir un programme d'exploitation et des données associées.

En sortie de chaine de fabrication, et au démarrage du programme SBL, le microcircuit SE est dans un état initial INT mémorisé par une variable d'état stockée dans la mémoire NVM ou dans un registre. Dans cet état, les mémoires non volatiles NVM, NWM du microcircuit SE ne contiennent aucune donnée spécifique au microcircuit SE. La réception d'un signal d'initialisation, déclenche une séquence d'initialisation. A l'issue de cette séquence d'initialisation, le microcircuit SE passe dans un état vierge VGN. La séquence d'initialisation permet d'introduire dans les mémoires non volatiles NVM, NWM des données d'initialisation telles qu'un identifiant unique SEID permettant d'identifier le microcircuit, une paire de clés privée SESK et publique SEPK, une clé publique d'un serveur habilité notamment à charger des données de profil d'un programme d'exploitation dans la mémoire NVM, et éventuellement une adresse d'accès à ce serveur. La variable d'état du microcircuit SE est mise à l'état VGN. La date d'initialisation du microcircuit peut également être mémorisée. Dans l'état VGN, les mémoires NVM, NWM du microcircuit SE ne contiennent donc aucune donnée relative à un système d'exploitation ou à une entité distributrice du microcircuit à des utilisateurs. Dans l'état VGN, le programme SBL peut passer dans un état préchargé PLD à la suite de la réception de données de profil OSPL d'un programme d'exploitation OS. Ces données de profil comprennent la taille du programme OS qui sera transmis par la suite au microcircuit SE, une adresse mémoire de début d'installation du programme OS, une adresse mémoire de début d'écriture de données du programme OS, une clé publique, et éventuellement une adresse d'accès du fournisseur du programme OS, un nom et une somme de contrôle du programme OS. Les données de profil peuvent aussi comprendre une date d'installation du programme OS et une durée de validité. Dans l'état PLD, le programme SBL peut passer dans un état ERS d'effacement du programme OS et des données de profil associées OSPL, sur réception d'une requête d'effacement ERRQ reçue par le microcircuit, ou dans un état prêt RDY qui peut être atteint lorsqu'un programme OS et des données associées OSL ont été chargées et installées avec succès dans la mémoire NVM du microcircuit SE. Dans l'état RDY, le programme SBL peut passer à l'état ERS à la suite de la réception d'une requête d'effacement ERRQ ou dans un état désactivé KLD. L'état ERS peut également être activé sur réception par le microcircuit SE d'un signal relatif à un événement critique CEVT. Dans l'état ERS, le programme SBL procède à l'effacement du programme OS et des données de profil associées OSPL dans la mémoire NVM. En fin de procédure d'effacement, le microcircuit SE retourne à l'état VGN.

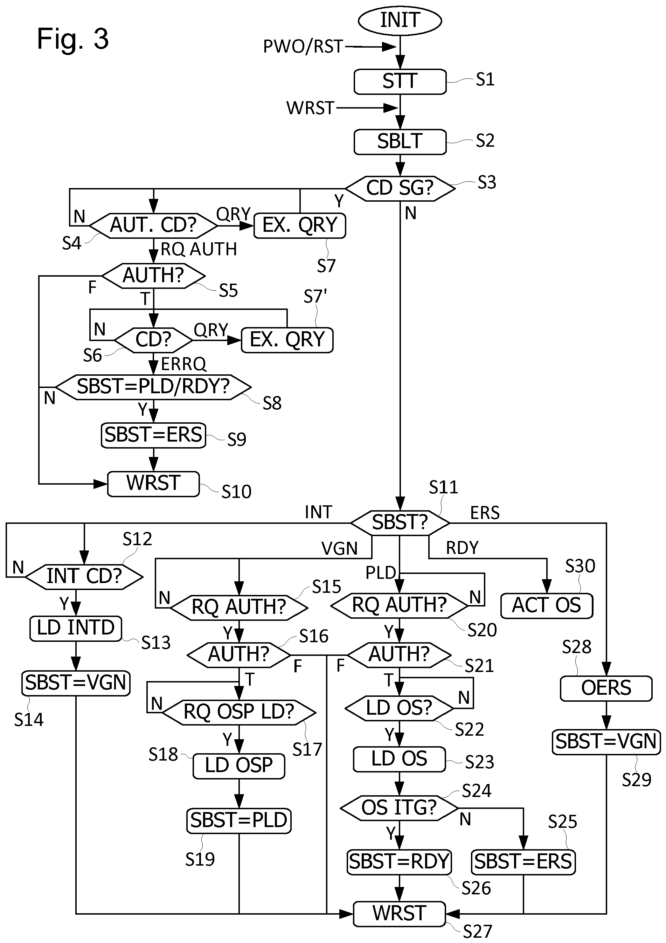

La figure 3 représente des étapes exécutées par le processeur PRC sous le contrôle du programme SBL. A sa mise sous tension PWO ou à la suite de l'activation d'un signal d'initialisation RST (démarrage à froid), le processeur PRC exécute des étapes S1 à S5. A l'étape S1, le processeur PRC effectue des tests de démarrage et active son circuit d'interface ICM. A l'étape S2, le processeur teste l'intégrité du programme SBL, par exemple en calculant une somme de contrôle à partir du programme SBL et des données associées, mémorisés dans la mémoire NWM et/ou NVM, ou chargés dans la mémoire VM. L'étape S1 n'est exécutée qu'à la mise sous tension PWO du processeur PRC ou à la suite de l'activation d'un signal d'initialisation RST. En revanche l'étape S2 est exécutée directement à l'activation d'un signal de réinitialisation ou de redémarrage WRST pendant que le processeur PRC est alimenté (démarrage à chaud). A l'étape S3, le processeur PRC détermine s'il a reçu un signal de passage dans un mode de commande. Si le processeur PRC a reçu un tel signal, il se met dans un état où il peut recevoir et traiter des commandes provenant de l'extérieur du microcircuit SE (étapes S4 à S10), sinon il exécute certaines des étapes S11 à S30. Le signal de passage en mode de commande peut être un signal de démarrage à chaud combiné avec un autre signal présent sur une entrée du processeur PRC. Le signal de passage en mode de commande peut être également une séquence d'un nombre défini de signaux de démarrage à chaud reçu pendant un temps également défini. La séquence de signaux de démarrage à chaud peut être définie par des paramètres d'initialisation du microcircuit SE.

A l'étape S4, le processeur PRC se met en attente d'une commande autorisée. A l'étape S4, le processeur PRC ne peut traiter qu'une requête d'authentification ou une commande de lecture d'une donnée non confidentielle, provenant du circuit d'interface ICM. Si la commande reçue est une requête d'authentification RQ AUTH, le processeur PRC exécute l'étape S5 d'exécution d'une procédure d'authentification mutuelle avec l'émetteur de la requête. Si la commande reçue est une commande de lecture d'une donnée non confidentielle, le processeur PRC exécute l'étape S7. A l'étape S5, si l'authentification mutuelle s'est déroulée sans erreur, le processeur PRC exécute l'étape S6, sinon, il exécute l'étape S10 où le processeur PRC active le signal WRST, ce qui permet de réactiver le programme SBL à l'étape S2. Il peut être prévu que plusieurs échecs d'authentification à l'étape S5 déclenchent le signal CEVT de passage à l'état ERS d'effacement du programme OS. A l'étape S7, le processeur PRC exécute la commande de lecture et revient à l'étape S4. A l'étape S6, le processeur PRC se met en attente d'une commande provenant du circuit ICM. A cette étape, le processeur PRC peut traiter une commande ERRQ d'effacement du programme OS installé dans la mémoire NVM, ou une commande de lecture d'une donnée qui peut être confidentielle.

Si la commande reçue à l'étape S6 est une commande de lecture d'une donnée, le processeur exécute l'étape S7' de lecture de la donnée et retourne à l'étape S6. Si la commande reçue à l'étape S6 est une commande d'effacement ERRQ, le processeur PRC exécute l'étape S8. A cette étape, le processeur teste si l'état courant SBST du microcircuit SE est compatible avec l'exécution de la commande ERRQ, c'est-à-dire si l'état SBST est à RDY ou PLD (conformément au diagramme d'état de la figure 3). Si l'état du microcircuit SE n'est pas compatible avec l'exécution d'une commande d'effacement ERRQ, le processeur PRC exécute l'étape S10 où il déclenche l'émission d'un signal de redémarrage à chaud WRST (pour retourner à l'étape S2). Dans le cas contraire, le processeur PRC exécute les étapes S9 et S10. A l'étape S9, le processeur PRC change l'état SBST du microcircuit SE pour le faire passer à ERS (conformément au diagramme d'état de la figure 3).

A l'étape S11, le processeur PRC teste l'état SBST du microcircuit SE. Si l'état SBST est à INT, le processeur exécute les étapes S12 à S14. Si l'état SBST est à VGN, il exécute les étapes S15 à S19. Si l'état SBST est à PLD, il exécute les étapes S20 à S27. Si l'état SBST est à RDY, il exécute l'étape S30 où il active le programme OS précédemment installé aux étapes S17 à S29. Si l'état SBST est à ERS, il exécute les étapes S28 et S29.

A l'étape S12, le processeur PRC se met en attente d'une commande d'initialisation en provenance du circuit ICM. Lorsque la commande d'initialisation est reçue, le processeur exécute les étapes S13, S14 et S27 correspondant à la transition entre les états INT et VGN. L'accès à l'étape S12 peut être protégé par un mot de passe éventuellement chiffré, qui est inscrit dans la mémoire NVM lors de la fabrication du microcircuit. A l'étape S13, le processeur PRC charge des données d'initialisation transmises avec la commande reçue dans la mémoire NVM. A l'étape S14, le processeur met l'état SBST du microcircuit SE à VGN. A l'étape S27, le processeur PRC active le signal WRST, ce qui permet de réactiver le programme SBL à l'étape S2.

A l'étape S15, le microcircuit étant à l'état VGN, le processeur PRC se met en attente d'une requête d'authentification reçue par le circuit d'interface ICM. A l'étape S16, le processeur exécute une procédure d'authentification mutuelle avec un serveur en communication avec le microcircuit SE. Si la procédure d'authentification s'est terminée avec une erreur, le processeur PRC exécute directement l'étape S27, sinon, il exécute les étapes S17 à S19, puis S27. A l'étape S17, le processeur PRC se met en attente d'une commande de chargement de données de profil d'un programme d'exploitation OSPL. Lorsque cette commande est reçue, le processeur charge les données reçues (étape S18). A l'étape S19, le processeur PRC change l'état SBST du microcircuit pour le mettre à PLD.

A l'étape S20, le microcircuit SE étant à l'état PLD, le processeur PRC se met en attente d'une requête d'authentification RQ AUTH reçue par le circuit d'interface ICM. A l'étape S21, le processeur exécute la procédure d'authentification mutuelle avec un serveur en communication avec le microcircuit SE. Si la procédure d'authentification s'est terminée avec une erreur, le processeur PRC exécute l'étape S27, sinon, il exécute les étapes S22 à S24. A l'étape S22, le processeur PRC se met en attente d'un premier message de téléchargement d'un programme d'exploitation OS. A l'étape S23, il exécute une procédure de chargement et d'installation du programme OS. A l'étape S24, il exécute une procédure de vérification de l'intégrité du programme OS chargé et installé, par exemple par calcul d'une somme de contrôle et comparaison de la valeur obtenue avec une valeur attendue. Si la vérification du programme OS installé échoue, le processeur exécute l'étape S25 où il met l'état SBST du microcircuit SE à ERS, sinon il exécute l'étape S24 où il met cet état à RDY. A la suite des étapes S24 et S25, le processeur PRC exécute l'étape S27 permettant de réactiver la procédure à l'étape S2.

A l'étape S28, dans l'état ERS du microcircuit SE, le processeur PRC exécute la commande ERRQ d'effacement du programme OS. Ensuite, le processeur exécute les étapes S29 et S27, où il met l'état SBST du microcircuit SE à VGN et active le signal WRST.

Dans l'état RDY à l'étape S11 (à la suite de la réception du signal WRST), le processeur PRC lance l'exécution du programme OS. Lors de sa première activation, le programme OS peut transmettre au serveur qui a transmis le programme OS au microcircuit SE, un message contenant un compte rendu d'installation du programme OS. Le microcircuit SE est ensuite prêt à recevoir des données de personnalisation relatives à un utilisateur microcircuit. Le microcircuit SE peut également recevoir une ou plusieurs applications permettant chacune de conduire un type de transaction avec un type de terminal.

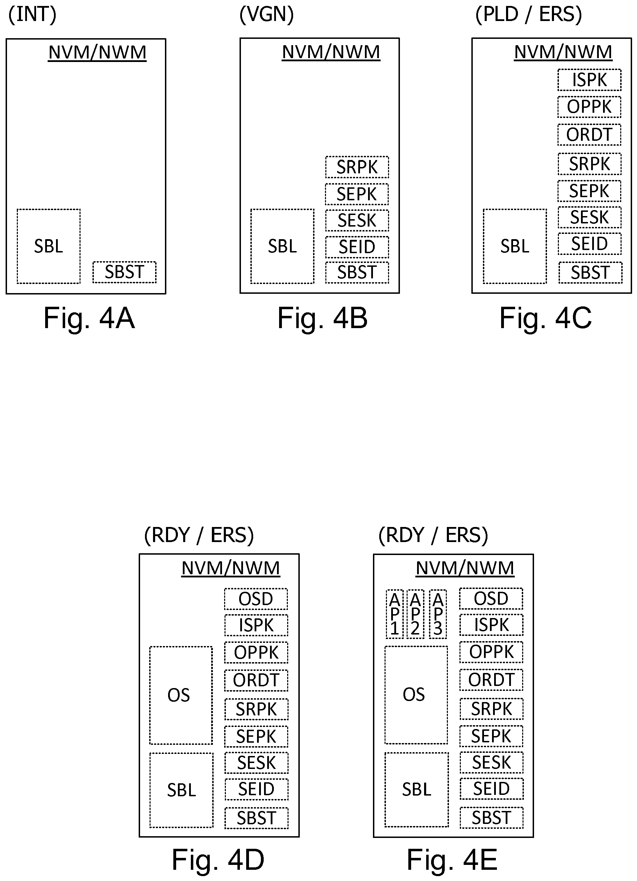

Les figures 4A à 4E représentent le contenu des mémoires non volatiles NVM, et éventuellement NWM, du microcircuit SE, dans les différents états représentés sur la figure 2. La figure 4A représente le contenu des mémoires NWM, NVM dans l'état INT, c'est-à-dire à l'issue de la fabrication du microcircuit. Dans l'état INT, la mémoire NVM / NWM contient simplement le programme SBL et la variable d'état SBST initialisée à INT. La figure 4B représente le contenu des mémoires NWM, NVM dans l'état VGN. Dans l'état VGN, la mémoire NVM / NWM contient en plus, un identifiant SEID du microcircuit SE, par exemple un numéro de série, une paire de clés publique SEPK et privée SESK, ainsi que des informations relatives à un serveur autorisé à charger des données de profil d'un programme d'exploitation OSPL dans la mémoire non volatile NVM du microcircuit SE. Les informations relatives au serveur autorisé comprennent une clé publique SRSK et éventuellement une adresse SRVA ou un identifiant de ce serveur.

La figure 4C représente le contenu des mémoires NWM, NVM dans l'état PLD. Dans l'état PLD, la mémoire NVM contient en plus des données présentes dans l'état VGN, des données ORDT relatives au programme d'exploitation OS susceptible d'être chargé dans la mémoire NVM, une clé publique OPPK d'une entité autorisée à charger le programme OS, et une clé publique d'une entité distributrice du microcircuit SE. Les données ORDT relatives au programme OS comprennent un identifiant du programme, la taille du programme OS et une adresse de début de chargement du programme dans la mémoire NVM, la taille des données du programme OS et une adresse de début de chargement de ces données dans la mémoire NVM, une donnée d'intégrité du programme, telle qu'une somme de contrôle, et éventuellement la date de chargement de ces données dans la mémoire NVM.

La figure 4D représente le contenu des mémoires NWM, NVM dans l'état RDY. Dans l'état RDY, la mémoire NVM contient en plus des données présentes dans l'état PLD, le programme OS installé et des données OSD du programme OS. La figure 4E représente le contenu des mémoires NWM, NVM dans l'état RDY, à la suite du chargement et de l'installation d'applications AP1, AP2, AP3.

Les mémoires NWM, NVM représentées sur les figures 4C à 4E peuvent également être dans l'état ERS si une commande d'effacement ERRQ authentifiée a été transmise au microcircuit SE, mais n'as pas encore été traitée.

Seul le programme OS, et non le programme SBL, peut assurer le chargement et l'installation des applications AP1, AP2, AP3, et la gestion des mémoires VM et NVM pour assurer le stockage et la manipulation de données d'application. D'une manière générale, seul le programme OS peut gérer des espaces mémoire d'exécution des applications, en chargeant le code exécutable d'une application à exécuter dans la mémoire VM, en attribuant à l'application un espace mémoire d'exécution spécifique et étanche, et en assurant l'interface entre l'application et les ressources matérielles du microcircuit SE, telles que le circuit d'interface de communication ICM, un coprocesseur de cryptographie, et les mémoires VM, NVM. Il est à noter que le programme SBL ne peut en aucun cas être considéré comme un programme ou système d'exploitation vis-à-vis du programme OS qui ne peut pas non plus être considéré comme une application vis-à-vis du programme SBL. En effet, une fois que le programme OS est installé (microcircuit SE à l'état RDY), le programme SBL n'effectue au démarrage du microcircuit SE qu'un ensemble de tests (étapes S1, S2) avant de passer la main au programme OS. Par conséquent, le programme SBL n'assure pas le chargement dans la mémoire VM du programme OS en vue de son exécution, ni l'interface entre le programme OS et les ressources matérielles du microcircuit SE, ni l'attribution d'un espace mémoire volatile pour l'exécution du programme OS.

Selon un mode de réalisation, le programme OS dispose de ressources propres qu'il ne partage pas avec le programme SBL. Ainsi, le programme OS assure lui-même la commande des circuits d'interface ICM et dispose de fonctions de cryptographie. Si le processeur PRC dispose d'une table de vecteurs d'interruption ou de vecteurs d'exception, l'installation du programme OS reconfigure cette table, à l'exception des vecteurs correspondant aux signaux de mise sous tension PWO, d'initialisation RST et de réinitialisation WRST.

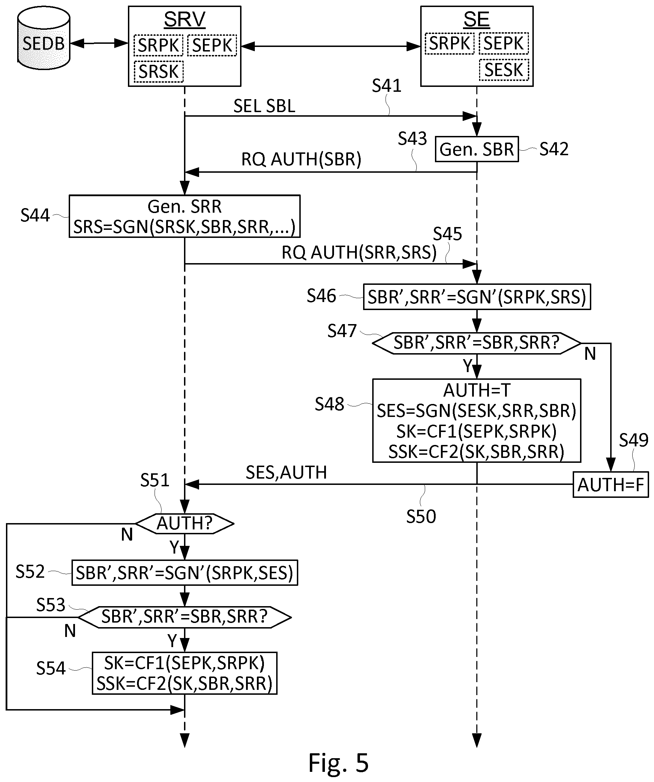

La figure 5 représente des étapes de la procédure d'authentification exécutée aux étapes S5, S16 et S21. Cette procédure comprend des étapes S41 à S54 exécutées par le microcircuit SE et un serveur SRV. Le microcircuit SE et le serveur SRV peuvent communiquer entre eux par tout moyen, par exemple par l'intermédiaire d'un lecteur avec ou sans contact, auquel le microcircuit SE peut se connecter. Le microcircuit SE peut également être inséré dans un téléphone mobile et communiquer avec le serveur SRV par l'intermédiaire d'un processeur du téléphone et d'une liaison de communication utilisant une interface de communication du téléphone (GSM / 3G / LTE / USB / WIFI, ...).

Le serveur SRV dispose de l'identifiant SEID et la clé publique SEPK du microcircuit SE qui peuvent être stockés dans une base de données SEDB d'identifiants de microcircuits mis en service. A l'étape S41, le serveur SRV établit une communication avec le microcircuit SE et émet une commande de sélection du programme SBL. Cette commande peut être conforme au protocole APDU (Application Protocol Data Unit) défini par la norme ISO 7816. A l'étape S42, le processeur PRC du microcircuit SE génère un nombre aléatoire SBR. A l'étape S43, le processeur PRC transmet en réponse au serveur SRV une requête d'authentification contenant le nombre SBR. A l'étape S44, le serveur SRV génère un nombre aléatoire SRR, et calcule une signature SRS à l'aide d'une fonction de cryptographie SGN appliquée au nombre aléatoire SBR reçu du microcircuit SE et au nombre aléatoire généré SRR, en utilisant une clé privée SRSK du serveur SRV correspondant à la clé publique SRPK mémorisée par le microcircuit SE. A l'étape S45, le serveur SRV transmet au microcircuit SE une requête d'authentification contenant le nombre aléatoire SRR et la signature SRS. A l'étape S46, le processeur PRC applique à la signature reçue SRS une fonction de cryptographie SGN' correspondant à la fonction SGN, en utilisant la clé publique SRPK du serveur SRV. Dans ces conditions, la fonction SGN' fournit des nombres SBR' et SRR'. A l'étape S47, le processeur PRC compare les nombres SBR' et SBR, ainsi que les nombres SRR' et SRR. Aux étapes S48 et S49, le processeur PRC met à jour un indicateur d'authentification AUTH en fonction du résultat de ces comparaisons. L'étape S48 est exécutée si les nombres SBR' et SBR correspondent et si les nombres SRR' et SRR correspondent, ce qui signifie que le serveur SRV possède bien la clé privée SRSK correspondant à la clé publique SRPK mémorisée par le microcircuit SE, et est donc correctement authentifié. A l'étape S48, le processeur PRC calcule également une signature SES en appliquant la fonction SGN aux nombres SBR et SRR, en utilisant sa clé privée SESK. Le processeur PRC génère également une donnée secrète SK en appliquant une fonction cryptographique CF1 aux clés publiques SEPK et SRPK du microcircuit SE et du serveur SRV, et calcule une clé de session SSK en appliquant une fonction cryptographique CF2 à la donnée secrète SK et aux nombres aléatoires SBR et SRR. La fonction CF1 peut être une fonction de Diffie-Hellmann, par exemple appliquée à des points d'une courbe elliptique dans un corps de Galois. La fonction CF2 peut être une fonction irréversible telle qu'une fonction de hachage, comme par exemple SHA-1. L'étape S50 est exécutée par le processeur PRC à la suite de l'étape S48 ou S49. A l'étape S50, le processeur PRC transmet au serveur SRV l'indicateur d'authentification AUTH et éventuellement la signature SES.

A l'étape S51, le serveur SRV reçoit l'indicateur AUTH et éventuellement la signature SES, et teste la valeur de l'indicateur AUTH. Le serveur SRV exécute les étapes S52 à S54 seulement si l'indicateur AUTH signale que le microcircuit SE a authentifié le serveur SRV. Aux étapes S52, S53, le serveur SRV vérifie la signature SES de la même manière qu'aux étapes S46 et S47. Si la signature SES est erronée, le serveur SRV met fin à la procédure, éventuellement en transmettant un message d'erreur au microcircuit SE. Dans le cas contraire, le serveur SRV exécute l'étape S54 où il calcule la donnée secrète SK et la clé de session SSK, de la même manière qu'à l'étape S48. Le serveur SRV et le microcircuit sont alors prêts à échanger des données de manière sécurisée et confidentielle grâce à la clé de session SSK.

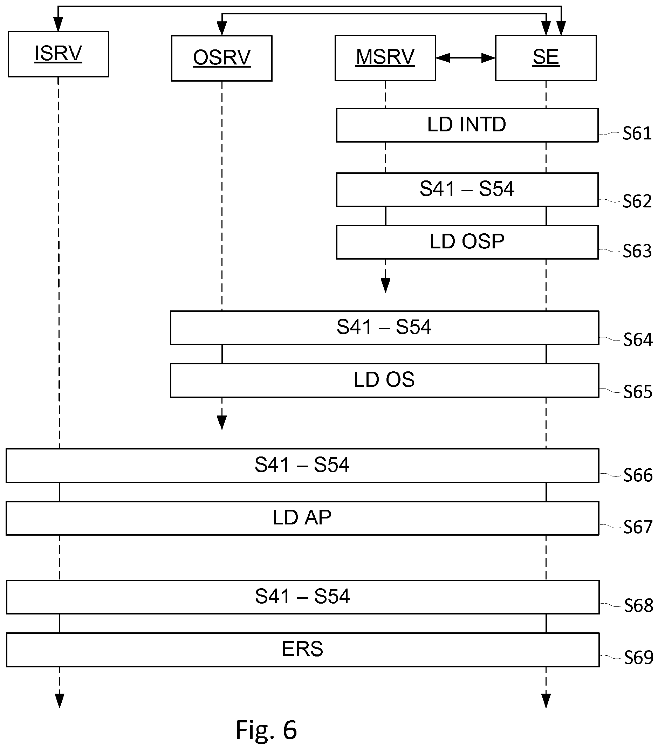

La figure 6 représente des étapes S61 à S69 exécutées par le microcircuit SE sous le contrôle du programme SBL et par des serveurs MSRV, OSRV et ISRV. Les étapes S61 à S63 sont exécutées avec le serveur MSRV qui représente un serveur du fabricant du microcircuit SE. L'étape S61 représente le chargement de données d'initialisation du programme SBL (étape S13). L'étape S61 permet de faire passer le microcircuit SE de l'état INT à l'état VGN. L'étape S61 peut être suivie de la transmission d'une commande ou d'une requête d'authentification. L'étape S62 représente une procédure d'authentification mutuelle exécutée par le serveur MSRV et le microcircuit SE, à la suite de la transmission au microcircuit d'une requête d'authentification. Si cette procédure d'authentification s'est correctement déroulée, l'étape S62 peut être suivie par l'étape S63 de chargement de données de profil de programme d'exploitation OSP. L'étape S63 permet de faire passer le microcircuit SE dans l'état PLD.

Les étapes S64 et S65 peuvent être exécutées par un fournisseur du programme OS, les données OSP comportant à cet effet la clé publique OPPK du serveur OSRV qui est autorisé à charger le programme OS dans le microcircuit SE. A l'étape S64, le serveur OSRV et le microcircuit SE exécutent une procédure d'authentification mutuelle. Si cette procédure d'authentification s'est correctement déroulée, l'étape S64 peut être suivie par l'étape S65 de chargement d'un programme d'exploitation OS. Si l'étape S65 se déroule correctement le microcircuit SE passe dans l'état RDY.

Les étapes S66 à S69 peuvent être exécutées par le microcircuit dans l'état RDY et par le serveur ISRV d'un distributeur du microcircuit SE, dont la clé publique ISPK figure dans les données de profil du programme OS. A l'étape S66, le serveur ISRV et le microcircuit SE exécutent une procédure d'authentification mutuelle. Si cette procédure d'authentification s'est correctement déroulée, l'étape S66 peut être suivie par l'étape S67 de chargement d'une ou plusieurs applications AP1, AP2, AP3, ainsi que des données relatives à l'utilisateur à qui est remis le microcircuit SE. A l'étape S68, le serveur ISRV et le microcircuit SE exécutent une nouvelle procédure d'authentification mutuelle. Si cette procédure d'authentification s'est correctement déroulée, l'étape S68 peut être suivie par l'étape S69 d'exécution d'une commande d'effacement transmise par le serveur ISRV au microcircuit SE. Durant l'exécution de la commande d'effacement, le microcircuit SE passe successivement par les états ERS et VGN. Dans l'état VGN, seul le serveur MSRV dont la clé publique figure dans les données d'initialisation du programme SBL peut recharger des données de profil de programme d'exploitation OSP (étapes S62, S63). Le microcircuit SE peut ensuite recevoir d'un autre serveur référencé dans les données de profil chargées à l'étape S63, un programme d'exploitation (étapes S64, S65) et des données d'application (étapes S66, S67).

Il apparaîtra clairement à l'homme de l'art que la présente invention est susceptible de diverses variantes de réalisation et diverses applications. En particulier, l'invention n'est pas limitée à l'exécution d'une procédure d'effacement d'un système ou programme d'exploitation préalablement installé dans le microcircuit. En effet, bien que l'effacement d'un tel programme soit prévue, le microcircuit peut fonctionner pendant toute sa durée de vie avec un même programme d'exploitation.

L'installation d'applications dans le microcircuit à la suite du programme d'exploitation n'est pas non plus nécessaire. Le programme d'exploitation installé dans le microcircuit peut inclure des fonctions ou applications permettant au microcircuit d'exécuter certaines transactions ou d'accéder à un service.

Par ailleurs, selon le degré de sécurité requis, il peut ne pas être nécessaire de procéder à un test d'intégrité du programme d'exploitation une fois ce dernier installé dans le microcircuit.

## Revendications

1. Procédé de chargement d'un programme d'exploitation dans un microcircuit sécurisé (SE), comprenant des étapes consistant à :
charger et installer dans le microcircuit un programme d'initialisation (SBL) qui est lancé à l'activation du microcircuit,
charger dans le microcircuit des données d'initialisation comprenant une première clé publique (SRPK),
exécuter une procédure d'authentification mutuelle entre le microcircuit et un premier serveur (MSRV) disposant d'une clé privée correspondant à la première clé publique, et si l'authentification mutuelle a réussi, charger à partir du premier serveur des données de profil de programme d'exploitation (OSPL), contenant une seconde clé publique (OPPK),
exécuter une procédure d'authentification mutuelle entre le microcircuit et un second serveur (OSRV) disposant d'une clé privée correspondant à la seconde clé publique, et si l'authentification mutuelle a réussi, charger à partir du second serveur et installer un programme d'exploitation (OS) dans le microcircuit, et
activer le programme d'exploitation lorsque celui-ci est présent dans le microcircuit.

2. Procédé selon la revendication 1, comprenant des étapes consistant à :
exécuter une procédure d'authentification mutuelle entre le microcircuit (SE) et un troisième serveur (ISRV) disposant d'une clé privée correspondant à une troisième clé publique (ISPK) figurant dans les données de profil de programme d'exploitation (OSPL), et
si l'authentification mutuelle a réussi, charger à partir du troisième serveur et installer une application (AP1, AP2, AP3) dans le microcircuit, et/ou charger dans le microcircuit des données d'utilisateur du microcircuit.

3. Procédé selon la revendication 1 ou 2, comprenant des étapes consistant à :
exécuter une procédure d'authentification mutuelle entre le microcircuit (SE) et un troisième serveur (ISRV) disposant d'une clé privée correspondant à une troisième clé publique (ISPK) figurant dans les données de profil de programme d'exploitation (OSPL), et
si l'authentification mutuelle a réussi, exécuter une commande d'effacement (ERRQ) du programme d'exploitation (OS) et des données de profil de programme d'exploitation, dans le microcircuit, la commande d'effacement étant transmise au microcircuit à partir du troisième serveur, et placer le microcircuit dans un état où il est susceptible de recevoir de nouvelles données de profil de programme d'exploitation à partir du premier serveur (MSRV).

4. Procédé selon l'une des revendications 1 à 3, dans lequel les données de profil de programme d'exploitation (OSPL) et/ou le programme d'exploitation (OS) sont transmis sous une forme chiffrée en utilisant une clé secrète (SSK) partagée entre le microcircuit (SE) et le premier et/ou second serveur (MSRV, OSRV) durant la procédure d'authentification mutuelle.

5. Procédé selon l'une des revendications 1 à 4, comprenant une étape de réception par le microcircuit (SE) d'un signal d'activation d'un mode de commande dans lequel le microcircuit peut recevoir des commandes d'un serveur, y compris une commande d'effacement (ERRQ) du programme d'exploitation (OS).

6. Procédé selon la revendication 5, dans lequel le signal d'activation du mode de commande comprend une séquence de plusieurs signaux de réinitialisation (WRST) reçus pendant une certaine durée.

7. Procédé selon l'une des revendications 1 à 6, comprenant une étape de contrôle d'intégrité du programme d'initialisation (SBL) au démarrage du microcircuit (SE).

8. Procédé selon l'une des revendications 1 à 7, dans lequel l'installation du programme d'exploitation (OS) dans le microcircuit (SE) est suivie d'un contrôle d'intégrité du programme d'exploitation installé (OS), le programme d'exploitation étant effacé du microcircuit si le contrôle d'intégrité a échoué.

9. Microcircuit sécurisé configuré par un programme d'initialisation (SBL) pour :
charger dans le microcircuit (SE) des données d'initialisation (INIT) comprenant une première clé publique (SRPK),
exécuter une procédure d'authentification mutuelle entre le microcircuit et un premier serveur disposant d'une clé privée correspondant à la première clé publique, et si l'authentification mutuelle a réussi, charger à partir du premier serveur des données de profil de programme d'exploitation (OSPL), contenant une seconde clé publique (OPPK), et
exécuter une procédure d'authentification mutuelle entre le microcircuit et un second serveur disposant d'une clé privée correspondant à la seconde clé publique, et si l'authentification mutuelle a réussi, charger à partir du second serveur et installer un programme d'exploitation (OS) dans le microcircuit, et
activer le programme d'exploitation lorsque celui est présent dans le microcircuit.

10. Microcircuit selon la revendication 9, configuré par le programme d'exploitation (OS) pour :
exécuter une procédure d'authentification mutuelle entre le microcircuit (SE) et un troisième serveur disposant d'une clé privée correspondant à une troisième clé publique (ISPK) figurant dans les données de profil de programme d'exploitation (OSPL), et
si l'authentification mutuelle a réussi, recevoir du troisième serveur et installer une application (AP1, AP2, AP3) dans le microcircuit, et/ou charger dans le microcircuit des données d'utilisateur du microcircuit.

11. Microcircuit selon la revendication 9 ou 10, configuré par le programme d'initialisation (SBL) pour :
exécuter une procédure d'authentification mutuelle entre le microcircuit (SE) et un troisième serveur disposant d'une clé privée correspondant à une troisième clé publique (OPPK) figurant dans les données de profil de programme d'exploitation (OSPL), et
si l'authentification mutuelle a réussi, recevoir du troisième serveur et exécuter une commande d'effacement (ERRQ) du programme d'exploitation (OS) et des données de profil de programme d'exploitation, dans le microcircuit, et placer le microcircuit dans un état où il est susceptible de recevoir de nouvelles données de profil de programme d'exploitation à partir du premier serveur.

12. Microcircuit selon l'une des revendications 9 à 11, configuré par le programme d'initialisation (SBL) pour recevoir un signal d'activation d'un mode de commande dans lequel le microcircuit (SE) peut recevoir des commandes d'un serveur, y compris une commande d'effacement (ERRQ) du programme d'exploitation (OS).

13. Microcircuit selon la revendication 12, dans lequel le signal d'activation du mode de commande comprend une séquence de plusieurs signaux de réinitialisation (WRST) reçus pendant une certaine durée.

14. Microcircuit selon l'une des revendications 9 à 13, configuré par le programme d'initialisation (SBL) pour contrôler l'intégrité du programme d'initialisation au démarrage du microcircuit (SE).

15. Microcircuit selon l'une des revendications 9 à 14, configuré par le programme d'initialisation (SBL) pour contrôler l'intégrité du programme d'exploitation (OS) une fois installé, et pour effacer le programme d'exploitation du microcircuit si le contrôle d'intégrité a échoué.

## Patentansprüche

1. Verfahren zum Laden eines Betriebsprogramms in eine sichere Mikroschaltung (SE), die folgenden Schritte umfassend:
Laden und Installieren in die Mikroschaltung eines Initialisierungsprogramms (SBL), das bei Aktivierung der Mikroschaltung gestartet wird,
Laden in die Mikroschaltung der Initialisierungsdaten, einen ersten öffentlichen Schlüssel (SRPK) umfassend,
Ausführen einer gegenseitigen Authentifizierungsprozedur zwischen der Mikroschaltung und einem ersten Server (MSRV), der über einen ersten privaten Schlüssel verfügt, der dem ersten öffentlichen Schlüssel entspricht, und wenn die gegenseitige Authentifizierung gelungen ist, Laden aus dem ersten Server der Betriebsprogramm-Profildaten (OSPL), die einen zweiten öffentlichen Schlüssel (OPPK) enthalten,
Ausführen einer gegenseitigen Authentifizierungsprozedur zwischen der Mikroschaltung und einem zweiten Server (OSRV), der über einen privaten Schlüssel verfügt, der dem zweiten öffentlichen Schlüssel entspricht, und wenn die gegenseitige Authentifizierung gelungen ist, Laden aus dem zweiten Server und Installieren eines Betriebsprogramms (OS) in der Mikroschaltung, und
Aktivieren des Betriebsprogramms, wenn dieses in der Mikroschaltung vorhanden ist.

2. Verfahren nach Anspruch 1, die folgenden Schritte umfassend:
Ausführen einer gegenseitigen Authentifizierungsprozedur zwischen der Mikroschaltung (SE) und einem dritten Server (ISRV), der über einen privaten Schlüssel verfügt, der einem dritten öffentlichen Schlüssel (ISPK) entspricht, der in den Betriebsprogramm-Profildaten (OSPL) aufscheint, und
wenn die gegenseitige Authentifizierung gelungen ist, Laden aus dem dritten Server und Installieren einer Applikation (AP1, AP2, AP3) in der Mikroschaltung, und/oder Laden in die Mikroschaltung der Benutzerdaten der Mikroschaltung.

3. Verfahren nach Anspruch 1 oder 2, die folgenden Schritte umfassend:
Ausführen einer gegenseitigen Authentifizierungsprozedur zwischen der Mikroschaltung (SE) und einem dritten Server (ISRV), der über einen privaten Schlüssel verfügt, der einem dritten öffentlichen Schlüssel (ISPK) entspricht, der in den Betriebsprogramm-Profildaten (OSPL) aufscheint, und
wenn die gegenseitige Authentifizierung gelungen ist, Ausführen eines Befehls zum Löschen (ERRQ) des Betriebsprogramms (OS) und der Betriebsprogramm-Profildaten in der Mikroschaltung, wobei der Befehl zum Löschen aus dem dritten Server zur Mikroschaltung übertragen wurde, und Versetzen der Mikroschaltung in einen Zustand, in dem sie in der Lage ist, neue Betriebsprogramm-Profildaten aus dem ersten Server (MSRV) zu empfangen.

4. Verfahren nach einem der Ansprüche 1 bis 3, wobei die Betriebsprogramm-Profildaten (OSPL) und/ oder das Betriebsprogramm (OS) in einer chiffrierten Form unter Verwendung eines geheimen Schlüssels (SSK) übertragen werden, der während der gegenseitigen Authentifizierungsprozedur zwischen der Mikroschaltung (SE) und dem ersten und/ oder zweiten Server (MSRV, OSRV) geteilt wird.

5. Verfahren nach einem der Ansprüche 1 bis 4, einen Schritt zum Empfangen durch die Mikroschaltung (SE) eines Aktivierungssignals eines Befehlsmodus umfassend, bei dem die Mikroschaltung Befehle eines Servers, inklusive eines Befehls zum Löschen (ERRQ) des Betriebsprogramms (OS) empfangen kann.

6. Verfahren nach Anspruch 5, wobei das Aktivierungssignal des Befehlsmodus eine Abfolge mehrerer Rücksetzungssignale (WRST) umfasst, die während einer bestimmten Dauer empfangen werden.

7. Verfahren nach einem der Ansprüche 1 bis 6, einen Schritt zur Integritätskontrolle des Initialisierungsprogramms (SBL) beim Starten der Mikroschaltung (SE) umfassend.

8. Verfahren nach einem der Ansprüche 1 bis 7, wobei auf die Installation des Betriebsprogramms (OS) in der Mikroschaltung (SE) eine Integritätskontrolle des installierten Betriebsprogramms (OS) folgt, wobei das Betriebsprogramm aus der Mikroschaltung gelöscht wird, wenn die Integritätskontrolle fehlgeschlagen ist.

9. Sichere Mikroschaltung, die durch ein Initialisierungsprogramm (SBL) konfiguriert wird, um:
in die Mikroschaltung (SE) Initialisierungsdaten (INIT) zu laden, die einen ersten öffentlichen Schlüssel (SRPK) umfassen,
eine gegenseitige Authentifizierungsprozedur zwischen der Mikroschaltung und einem ersten Server auszuführen, der über einen ersten privaten Schlüssel verfügt, der einem ersten öffentlichen Schlüssel entspricht, und wenn die gegenseitige Authentifizierung gelungen ist, aus dem ersten Server Betriebsprogramm-Profildaten (OSPL), die einen zweiten öffentlichen Schlüssel (OPPK) enthalten, zu laden,
eine gegenseitige Authentifizierungsprozedur zwischen der Mikroschaltung und einem zweiten Server auszuführen, der über einen privaten Schlüssel verfügt, der dem zweiten öffentlichen Schlüssel entspricht, und wenn die gegenseitige Authentifizierung gelungen ist, aus dem zweiten Server ein Betriebsprogramm (OS) zu laden und in der Mikroschaltung zu installieren, und
das Betriebsprogramm zu aktivieren, wenn dieses in der Mikroschaltung vorhanden ist.

10. Mikroschaltung nach Anspruch 9, die durch das Betriebsprogramm (OS) konfiguriert wird, um:
eine gegenseitige Authentifizierungsprozedur zwischen der Mikroschaltung (SE) und einem dritten Server auszuführen, der über einen privaten Schlüssel verfügt, der einem dritten öffentlichen Schlüssel (ISPK) entspricht, der in den Betriebsprogramm-Profildaten (OSPL) aufscheint, und
wenn die gegenseitige Authentifizierung gelungen ist, aus dem dritten Server eine Applikation (AP1, AP2, AP3) zu empfangen und in der Mikroschaltung zu installieren, und/oder Benutzerdaten der Mikroschaltung in die Mikroschaltung zu laden.

11. Mikroschaltung nach Anspruch 9 oder 10, die durch das Initialisierungsprogramm (SBL) konfiguriert wird, um:
eine gegenseitige Authentifizierungsprozedur zwischen der Mikroschaltung (SE) und einem dritten Server auszuführen, der über einen privaten Schlüssel verfügt, der einem dritten öffentlichen Schlüssel (OPPK) entspricht, der in den Betriebsprogramm-Profildaten (OSPL) aufscheint, und
wenn die gegenseitige Authentifizierung gelungen ist, aus dem dritten Server einen Befehl zum Löschen (ERRQ) des Betriebsprogramms (OS) und der Betriebsprogramm-Profildaten in der Mikroschaltung zu empfangen und auszuführen, und die Mikroschaltung in einen Zustand zu versetzen, in dem sie in der Lage ist, neue Betriebsprogramm-Profildaten aus dem ersten Server zu empfangen.

12. Mikroschaltung nach einem der Ansprüche 9 bis 11, die durch das Initialisierungsprogramm (SBL) konfiguriert wird, um ein Aktivierungssignal eines Befehlsmodus zu empfangen, bei dem die Mikroschaltung (SE) Befehle eines Servers, inklusive eines Befehls zum Löschen (ERRQ) des Betriebsprogramms (OS) empfangen kann.

13. Mikroschaltung nach Anspruch 12, wobei das Aktivierungssignal des Befehlsmodus eine Abfolge mehrerer Rücksetzungssignale (WRST) umfasst, die während einer bestimmten Dauer empfangen werden.

14. Mikroschaltung nach einem der Ansprüche 9 bis 13, die durch das Initialisierungsprogramm (SBL) konfiguriert wird, um die Integrität des Initialisierungsprogramms beim Start der Mikroschaltung zu kontrollieren.

15. Mikroschaltung nach einem der Ansprüche 9 bis 14, die durch das Initialisierungsprogramm (SBL) konfiguriert wird, um die Integrität des Betriebsprogramms (OS), sobald es installiert ist, zu kontrollieren, und um das Betriebsprogramm aus der Mikroschaltung zu löschen, wenn die Integritätskontrolle fehlgeschlagen ist.

## Claims

1. A method of loading an operating program in a secure microcircuit (SE), comprising the steps of:
downloading and installing in the microcircuit a boot program (SBL), which is launched upon activation of the microcircuit,
loading into the microcircuit initialization data including a first public key (SRPK),
performing a mutual authentication procedure between the microcircuit and a first server (MSRV) having a private key corresponding to the first public key, and if the mutual authentication is successful, loading from the first server operating program profile data (OSPL) holding a second public key (OPPK),
performing a mutual authentication procedure between the microcircuit and a second server (OSRV) having a private key corresponding to the second public key, and if the mutual authentication is successful, loading an operating program (OS) from the second server and installing it in the microcircuit, and
activating the operating program when it is in the microcircuit.

2. The method of claim 1, comprising the steps of:
performing a mutual authentication procedure between the microcircuit (SE) and a third server (ISRV) having a private key corresponding to a third public key (ISPK) held in the operating program profile data (OSPL), and
if the mutual authentication procedure is successful, loading an application (AP1, AP2, AP3) from the third server and installing it in the microcircuit, and/or loading user data in the microcircuit.

3. The method of claim 1 or 2, comprising the steps of:
performing a mutual authentication procedure between the microcircuit (SE) and a third server (ISRV) having a private key corresponding to a third public key (ISPK) held in the operating program profile data (OSPL), and
if the mutual authentication procedure is successful, running a command (ERRQ) for erasing the operating program (OS) and operating program profile data in the microcircuit, wherein the erase command is transmitted to the microcircuit from the third server, and placing the microcircuit in a state where it is ready to receive new operating program profile data from the first server (MSRV).

4. The method according to one of claims 1 to 3, wherein the operating program profile data (OSPL) and/or the operating program (OS) are transmitted in encrypted form using a secret key (SSK) shared between the microcircuit (SE) and the first and/or second server (MSRV, OSRV) during mutual authentication.

5. The method according to one of claims 1 to 4, comprising a step of receiving by the microcircuit (SE) a signal for enabling a control mode wherein the microcircuit can receive commands from a server, including an operating program erase command (ERRQ).

6. The method of claim 5, wherein the activation signal of the control mode includes a sequence of several reset signals (WRST) received during a period of time.

7. The method according to one of claims 1 to 6, comprising a step of checking the integrity of the boot program (SBL) upon start-up of the microcircuit (SE).

8. The method according to one of claims 1 to 7, wherein the installation of the operating program (OS) in the microcircuit (SE) is followed by an integrity check of the installed operating program (OS), wherein the operating program is erased from the microcircuit if the integrity check fails.

9. A secure microcircuit configured by a boot program (SBL) for:
loading into the microcircuit (SE) initialization data (INIT) comprising a first public key (SRPK),
performing a mutual authentication procedure between the microcircuit and a first server having a private key corresponding to the first public key, and if the mutual authentication is successful, loading from the first server operating program profile data (OSPL) holding a second public key (OPPK), and
performing a mutual authentication procedure between the microcircuit and a second server having a private key corresponding to the second public key, and if the mutual authentication is successful, loading an operating program (OS) from the second server and installing it in the microcircuit, and
activating the operating program when it is in the microcircuit.

10. The microcircuit according to claim 9, configured by the operating program (OS) for:
performing a mutual authentication procedure between the microcircuit (SE) and a third server having a private key corresponding to a third public key (ISPK) held in the operating program profile data (OSPL), and
if the mutual authentication is successful, receiving an application (AP1, AP2, AP3) from the third server and installing it in the microcircuit, and/or loading user data in the microcircuit.

11. The microcircuit according to claim 9 or 10, configured by the boot program (SBL) for:
performing a mutual authentication procedure between the microcircuit (SE) and a third server having a private key corresponding to a third public key (OPPK) held in the operating program profile data (OSPL), and
if the mutual authentication is successful, receiving from the third server and executing a command (ERRQ) for erasing the operating program (OS) and the operating program profile data from the microcircuit, and placing the microcircuit in a state where it is ready to receive new operating program profile data from the first server.

12. The microcircuit according to one of claims 9 to 11, configured by the boot program (SBL) for receiving a signal for enabling a control mode, wherein the microcircuit (SE) can receive commands from a server, including an operating program erase command (ERRQ).

13. The microcircuit according to claim 12, wherein the control mode enable signal includes a sequence of a number of reset signals (WRST) received during a period of time.

14. The microcircuit according to one of claims 9 to 13, configured by the boot program (SBL) to control the integrity of the boot program at start-up of the microcircuit (SE).

15. The microcircuit according to one of claims 9 to 14, configured by the boot program (SBL) to control the integrity of the operating program (OS) once it is installed, and to erase the operating program from the microcircuit if the integrity check failed.
